# EUROPÄISCHE PATENTSCHRIFT

(11) **EP 1 275 306 B1**
(45) Veröffentlichungstag und Bekanntmachung des Hinweises auf die Patenterteilung: **20.04.2005**
(21) Anmeldenummer: 02014707.0
(22) Anmeldetag: 03.07.2002
(51) Int. Cl.: A23B 7/005, A23L 1/06, A23L 3/16, H02K 9/20, A23L 1/212

(54) **Verfahren und Vorrichtung zum diskontinuierlichen Kühlen und Mischen einer fliessfähigen Lebensmittelzubereitung**
Method and apparatus for discontinuous cooling and mixing of a fluid food preparation
Processus et appareil pour le refroidissement discontinu et le mélange d'une préparation alimentaire fluide

(30) Priorität: 13.07.2001 DE 10134071
(43) Veröffentlichungstag der Anmeldung: 15.01.2003
(73) Patentinhaber: FRANZ ZENTIS GMBH & CO., 52070 Aachen (DE)
(72) Erfinder: Becker, Jürgen, Dr., 52477 Alsdorf (DE); Otte, Dietmar, Dipl.-Ing., 52076 Aachen (DE); Stauber, Dieter, Dr., 52134 Herzogenrath (DE); Baumer, Johannes, 4710 Lontzen (BE)
(74) Vertreter: Bauer, Dirk, Dipl.-Ing. Dipl.-Kfm.

(56) Entgegenhaltungen:
- EP-A- 0 755 629
- WO-A-01/49134
- DE-A- 4 313 618
- US-A- 2 696 775
- US-A- 4 162 127
- US-A- 6 082 123
- NEIRINCKX: "Large-scale freezers" 1983 , CREPACO INT. INC. , BRUSSELS, BELGIUM, XP001119492 [Paper from a lecture about Ice cream, held at a symposium in London, 19 and 20th oct. 1981. ISBN 0-12-078920-5] * Seite 50, Zeile 15 - Seite 51, Zeile 8 *

## Beschreibung

Die Erfindung betrifft ein Verfahren zum diskontinuierlichen Kühlen und Mischen einer fließfähigen Lebensmittelzubereitung in einem mit einem rotierenden Rührwerk ausgestatteten Kessel, wobei die Lebensmittelzubereitung mittels des Rührwerks entlang von Wandbereichen des Kessels bewegt wird und wobei ein von einem Doppelmantel des Kessels gebildeter Zwischenraum von einem Wärmeträgermedium durchströmt wird, welches in einer Kühleinrichtung rückgekühlt und im rückgekühlten Zustand wieder dem Doppelmantel des Zwischenraums zugeführt wird.

Des weiteren betrifft die Erfindung eine Vorrichtung zum diskontinuierlichen Kühlen und Mischen einer fließfähigen Lebensmittelzubereitung, mit einem Kessel, der mit einem drehantreibbaren Rührwerk versehen ist, mit dem die Lebensmittelzubereitung entlang von Randbereichen des Kessels bewegbar ist, wobei der Kessel zumindest bereichsweise einen Doppelmantel aufweist, durch dessen Zwischenraum ein Wärmeträgermedium leitbar ist.

Das vorgenannte Verfahren sowie die vorgenannte Vorrichtung sind allgemein bekannt und werden insbesondere im Bereich der Herstellung von Fruchtzubereitungen angewendet. In der Regel wird die Fruchtzubereitung zunächst in einem separaten, dem Kühlkessel vorgeschalteten Heizkessel gekocht und mit Zucker versetzt und anschließend in einem pasteurisierten Zustand in den in der Regel weiter unten angeordneten Kühlkessel abgelassen. Sowohl die Kochkessel als auch die Kühlkessel sind in der Regel großvolumig ausgebildet, um trotz der Chargenproduktion einen entsprechend großen Mengendurchsatz zu erzielen. So sind Chargenmassen von mehreren hundert Kilogramm üblich, wobei auch Massen bis über 1000 kg bereits realisiert wurden.

Vorrichtungen zum diskontinuierlichen Kühlen von Getränken sind aus der Patentschrift US 6 082 123 bekannt. Weiterhin sind Gefriermaschinen zur Herstellung von Eiskreme bekannt (z.B. US 4 162 127).

Während nach dem Stand der Technik der Doppelmantel des Kochkessels mit Wasserdampf durchströmt wird, wird als Wärmeträgermedium zur Kühlung des Kühlkessels in aller Regel eine sogenannte Kühlsohle verwendet, bei der es sich häufig um einen höherwertigen Alkohol wie beispielsweise Propylenglykol handelt. Bei der Herstellung von Lebensmittelzubereitungen ist es von großer Bedeutung, die Abkühlzeiten so kurz wie möglich zu halten. Einerseits geht eine geringe Abkühlgeschwindigkeit insbesondere bei höheren Temperaturniveaus mit einem Verlust an Vitaminen und Aromastoffen des Endprodukts einher. Des weiteren wird die mit einem solchen Kühlkessel pro Zeiteinheit verarbeitbare Masse durch lange Abkühlzeiten vermindert, so daß die Produktivität und die Wirtschaftlichkeit des Verfahrens sinkt. Als besonders kritisch ist in diesem Zusammenhang der Temperaturbereich von unter 35 bis 40°C anzusehen, da die Abkühlgeschwindigkeit bis zum Erreichen der Abfülltemperatur, die bei ca. 15 bis 20°C liegt, stark absinkt. Die beginnend bei Temperaturen von ca. 80°C anfänglich sehr großen Temperaturgradienten lassen sich insbesondere auch dann erzielen, wenn zusätzlich zu der Mantelkühlung mit Kühlsohle noch ein Vakuum an den Kessel angelegt wird. Durch die dann auch bei niedrigeren Temperaturen fortgesetzte Verdampfung von Wasser wird der Fruchtzubereitung die nicht unerhebliche Verdampfungsenthalpie des verdampfenden Wassers entzogen. Der rückgekühlte und kondensierte Wasserdampf wird üblicherweise der Fruchtzubereitung wieder zugesetzt, um den Wassergehalt durch die Vakuumkühlung nicht zu verändern.

Es besteht bereits seit geraumer Zeit das Bedürfnis, die Produktivität derartiger diskontinuierlicher Kühl- und Mischverfahren zu erhöhen, wobei angestrebt wird, die als eine Charge verarbeitete Masse zu vergrößern. Bei der Verwendung zylindrischer Kühlkessel mit rotatorisch bewegten Rührwerken führt eine Massen-, d. h. eine Volumenvergrößerung, zwangsläufig zu einer Verkleinerung des Oberflächen-Volumen-Verhältnisses, wenn die Bauhöhe des Kessels nicht überproportional vergrößert werden soll, was aus wirtschaftlichen Gründen kaum möglich ist. Das verkleinerte Oberflächen-Volumen-Verhältnis führt aber zu einem erschwerten Wärmeübergang aus der Fruchtzubereitung in den Doppelmantel, so daß die Abkühlzeiten tendenziell wieder vergrößert werden, was der Wirtschaftlichkeit grundsätzlich zuwider läuft.

Aus diesem Grunde ist versucht worden, den Wärmeübergang in den Doppelmantel durch Erhöhung der Temperaturdifferenz zwischen dem Wärmeträgermedium und der Fruchtzubereitung zu vergrößern, das heißt, die Temperatur der Kühlsohle zu reduzieren. Dieser Effekt führt jedoch aus dem nachfolgend erläuterten Grund nicht zu der gewünschten Vergrößerung des Wärmeübergangs. Mit sinkender Temperatur der Kühlsohle nimmt nämlich deren Viskosität überproportional zu, so daß innerhalb des Doppelmantels die Turbulenz der Strömung der Kühlsohle reduziert bzw. gänzlich unterbunden wird. Mit dieser Reduzierung der Turbulenz geht jedoch auch eine Reduzierung des Wärmeübergangskoeffizienten einher, da der Abtransport von Wärme von der Kesselwandung in das Innere der Kühlsohle erschwert wird. Es konnte durch experimentelle Untersuchungen der Anmelderin festgestellt werden, daß bei gegebenem Querschnitt des Doppelmantels ab einer gewissen Kühlsohlentemperatur trotz weiterer Temperaturreduzierung der effektive Wärmeübergang sinkt. In diesem Punkt sind die Grenzen einer Verkürzung der Abkühlzeit erreicht, weshalb nach anderen Lösungen gesucht werden muß.

Zum Stand der Technik zählen des weiteren sogenannte Schaberwärmetauscher, mit denen ein kontinuierliches Verfahren zur Erhitzung bzw. Abkühlung von Lebensmittelzubereitungen betrieben werden kann. Üblicherweise werden mehrere solcher Schaberwärmetauscher in Kolonnen hintereinander geschaltet, da mit jeder Stufe sinnvollerweise nur eine bestimmte Temperaturdifferenz erzielbar ist. Während üblicherweise nach einem Pufferspeicher mit einem Vorrat an flüssiger Lebensmittelzubereitung zunächst ein als Erhitzer wirkender Schaberwärmetauscher angeschlossen ist, sind diesem Erhitzer üblicherweise zwei oder mehr als Kühler wirkende Schaberwärmetauscher nachgeschaltet. Diese Schaberwärmetauscher weisen einen inneren rotierenden Zylinder auf, der an seiner Mantelfläche mit einer Mehrzahl von sich in axiale Richtung erstreckenden Schabern versehen ist. Die Schaber streifen entlang einer inneren Mantelfläche eines weiteren Zylinders. Zwischen dem ersten und dem zweiten Zylinder ist ein Zwischenraum mit einer Breite von ca. 15 mm eingeschlossen, durch den die Lebensmittelzubereitung in axiale Richtung strömt. Die Bewegung der Lebensmittelzubereitung ist insgesamt schraubengangförmig, da sich die axiale Strömungsrichtung und die tangenziale, durch die Schaberelemente bedingte Bewegungsrichtung überlagern. Das typische in einem Schaberwärmetauscher befindliche Volumen beträgt ca. 30 l.

Um den zweiten Zylinder herum ist ein dritter Zylinder angeordnet, wobei der Zwischenraum zwischen dem zweiten und dem dritten Zylinder von einem Wärmeträgermedium durchströmt wird. Als Wäremträgermedium wird hier beispielsweise Ammoniak verwendet. Aufgrund der kleinen Füllmasse derartiger Schaberwärmetauscher und der geringen Schichtdicke der zu kühlenden Lebensmittelzubereitung, kann die Durchtrittsgeschwindigkeit vergleichsweise groß gewählt werden, woraus kurze Aufenthaltszeiten der Lebensmittelzubereitung in dem Schaberwärmetauscher resultieren. Aufgrund des kontinuierlichen Prozesses ist eine Vakuumkühlung in Verbindung mit Schaberwärmetauschern nicht möglich. Als nachteilig bei kontinuierlichen Verfahrensweisen ist es des weiteren anzusehen, daß der Wechsel zwischen unterschiedlichen Produktsorten aufgrund der erforderlichen komplizierten Reinigungsvorgänge nicht ohne weiteres möglich ist, so daß eine wirtschaftliche Herstellung von kleineren Mengen nicht möglich ist.

Der Erfindung liegt die Aufgabe zugrunde, ein diskontinuierliches Verfahren zum Kühlen und Mischen einer fließfähigen Lebensmittelzubereitung zu schaffen, mit dem sich trotz der Chargenproduktion auf wirtschaftliche Weise hohe Produktionsmengen pro Zeiteinheit erzielen lassen. Des weiteren soll mit der Erfindung eine Vorrichtung zur Durchführung des erfindungsgemäßen Verfahrens bereitgestellt werden.

Ausgehend von einem Verfahren der eingangs beschriebenen Art wird diese Aufgabe erfindungsgemäß dadurch gelöst, daß als Wärmeträgermedium ein Kompressionskältemittel verwendet wird, das innerhalb des Zwischenraums des Wärmemantels zumindest zum Teil von der flüssigen in die gasförmige Phase übergeht.

Durch die Verwendung eines derartigen Kompressionskältemittels wird der Effekt der Viskositätserhöhung auch bei größerer Absenkung der Temperatur vermieden. Das Kompressionskältemittel verdampft im Verlaufe seines Wegs durch den Doppelmantel zumindest zum Teil und geht somit teilweise in die gasförmige Phase über. Aufgrund der für diesen Phasenübergang erforderlichen Verdampfungsentalpie kann dem zu kühlenden Kessel eine große Wärmemenge entzogen werden. Mit Hilfe des erfindungsgemäßen Verfahrens lassen sich somit sehr hohe Wärmübergangskoeffizienten im Bereich des Doppelmantels realisieren, so daß die Abkühlzeiten deutlich reduziert werden können. Eine drastische Verkürzung der benötigten Zeit, das heißt eine drastische Steigerung des erzielbaren Temperaturgradienten tritt ganz besonders im Temperaturbereich von unter 40°C ein. Die Abfülltemperatur kann somit wesentlich schneller erreicht werden, weshalb die Wirtschaftlichkeit des Verfahrens nach der Erfindung vortrefflich ist.

Als Kältemittel könnten beispielsweise Fluorchlorkohlenwasserstoffe (FCKW) oder wasserstoffhaltige Fluorchlorkohlenwasserstoffe (HFCKW) verwendet werden. Hierzu zählen beispielsweise die mit den Kürzeln R22, R123 und R124 bezeichneten Kältemittel. Alternativ hierzu kommt aber selbstverständlich auch die Verwendung chlorfreier, wasserstoffhaltiger Fluorchlorkohlenwasserstoffe (chlorfreie HFKW) in Frage. Hierzu zählen beispielsweise die mit den Kurzbezeichnungen R134a, R32, R404A, R410A und R507A versehenen Stoffe. Außerdem kommen auch gänzlich halogenfreie Kältemittel in Betracht, wie beispielsweise Propan (R290), Ammoniak (R717), CO₂ (R744) oder auch die Kältemittel R600A oder R170. Die vorstehende Aufzählung ist lediglich beispielhaft und erhebt keinen Anspruch auf Vollständigkeit.

Nach einer Ausgestaltung des erfindungsgemäßen Verfahrens wird vorgeschlagen, daß während des Abkühlvorgangs zumindest zeitweise an den Innenraum des Kessels ein Vakuum angelegt wird. Hierdurch kann insbesondere im oberen Temperaturbereich eine weitere Steigerung der Abkühlgeschwindigkeit erreicht werden.

Der Effekt einer Vergrößerung der Abkühlgeschwindigkeit ist besonders groß, wenn das Vakuum während eines Zeitraums angelegt wird, indem die Temperatur des Lebensmittels noch oberhalb von ca. 30°C, vorzugsweise oberhalb von ca. 40°C ist.

Um den Wassergehalt der Lebensmittelzubereitung durch den Dampfentzug in Folge einer Vakuumkühlung nicht zu verändern, können die beim Erzeugen des Vakuums aus dem Kessel abgezogenen Brüden des wasserhaltigen Lebensmittels kondensiert und wieder dem Kessel zugeführt werden.

Bei Verwendung sogenannter wandgängiger Rührwerke kann das Lebensmittel von den damit beaufschlagten Wandbereichen des Lebensmittels abgeschabt werden. Es findet somit ein Transport besonders kühler Lebensmittelzubereitungen in das Innere des Kessels statt, so daß auch dort ein schnellerer Temperaturrückgang eintritt. Vorzugsweise wird die Temperatur der von dem Schaber überstrichenen Wandbereiche des Kessels in Verbindung mit der Drehzahl des Rührwerks so eingestellt, daß sich an der Kesselwandung eine geringe Eisschicht bildet, die beim nächsten Überstreichen von den Schaberelementen des Rührwerks abgetragen wird. Auf diese Weise kann die Schmelzentalpie an das im Innern des Kessels befindliche Produkt abgegeben werden. Hierdurch kann der insbesondere bei großvolumigen Kesseln mit einem kleinen Oberflächen-Volumen-Verhältnis der Abtransport der Wärme aus dem Innern des Kessels verbessert werden.

Auch wenn grundsätzlich der Kessel nach Art eines trockenen Wärmetauschers betrieben werden kann, wird gemäß einer Weiterbildung des erfindungsgemäßen Verfahrens vorgeschlagen, daß innerhalb des Zwischenraums des Doppelmantels ein Blasensieden des Kompressionskältemittels stattfindet. Bei dieser Art eines sogenannten überfluteten Wärmetauschers ist der Wärmeübergang wegen des Phasenwechsels des Kompressionskältemittels, das heißt der Aufnahme der Verdampfungsenthalpie einerseits und der mit dem Aufsteigen der Blasen einhergehenden Erhöhung der Turbulenz der flüssigen Bestandteile besonders groß. Bei den bei dem anmeldungsgemäßen Verfahren typischerweise vorliegenden Temperaturdifferenzen im Bereich von deutlich kleiner als 150°C ist die Gefahr des Auftretens einer sogenannten Filmverdampfung, bei der der Wärmeübergangskoeffizient gegenüber dem Blasensieden drastisch abfällt, nicht gegeben.

Die Erfindung weiter ausgestaltend ist vorgesehen, daß die Kühleinrichtung ein Wärmetauscher ist, der von einem zweiten Kompressionskältemittel durchströmt wird, das in einem zweiten Kältemittelkreislauf geführt wird und mit dem ersten Kompressionskältemittel im Wärmeaustausch steht. Hierdurch ist es beispielsweise möglich, den Doppelmantel als Primärkreis mit einem chlorfreien HFKW zu betreiben und in einem außerhalb der eigentlichen Produktionsstätte unterbringbaren Sekundärkreislauf beispielsweise Ammoniak als Kompressionskältemittel zu verwenden. Diese Kombination kann deshalb besonders vorteilhaft sein, weil bisweilen die Verwendung von Ammoniak in der Produktionsstätte unerwünscht ist und hierdurch allein in den Maschinenraum verlagert werden kann. Jede andere aus besonderen Gründen gewünschte Kombination von Kältemitteln ist jedoch gleichfalls denkbar.

In bezug auf die bereitzustellende Vorrichtung wird die zugrunde liegende Aufgabe ausgehend von einer Vorrichtung der eingangs genannten Art dadurch gelöst, daß der Zwischenraum in dem Doppelmantel mit einem Druck von mindestens 10 bar beaufschlagbar ist.

Hierdurch wird die Möglichkeit geschaffen, mit Vorrichtungen, die sich gegenüber dem Stand der Technik nur durch die druckfeste Gestaltung des Doppelmantels unterscheiden, das erfindungsgemäße Verfahren, das heißt die Verwendung eines Kompressionskältemittels zu realisieren. Auch wenn der Druck im Betriebspunkt der Vorrichtung nur bei in der Regel wenigen bar liegt (bei Ammoniak mit einer Temperatur von - 17°C bei rund 2 bar), kann sich das in dem Zwischenraum des Doppelmantels befindliche Kompressionskältemittel insbesondere bei Stillstandszeiten im Sommer bis auf Raumtemperatur oder auch darüber erhitzten. Im Falle von Ammoniak liegt in diesem Fall ein Druck von rund 17 bar vor, dem der Doppelmantel durch Bereitstellung einer entsprechend soliden Konstruktion widerstehen muß.

Die erfindungsgemäße Vorrichtung zeichnet sich somit dadurch aus, daß mit ihr nicht nur Kühlsohlen verwendbar sind, sondern auch Kompressionskältemittel, bei denen im Doppelmantel ein Phasenwechsel auftritt. Durch die niedrigen Temperaturen, die mit derartigen Kompressionskältemitteln bei kaum zunehmender Viskosität realisierbar sind, lassen sich die Wärmeübergangskoeffizienten und damit die erforderlichen Abkühlzeiten bis zur Erreichung der Abfülltemperatur gegenüber von Kühlvorrichtungen nach dem Stand der Technik ganz erheblich reduzieren.

In Ausgestaltung der erfindungsgemäßen Vorrichtung wird vorgeschlagen, daß der Innenraum des Kessels mit einem Vakuum beaufschlagbar ist. Hierdurch kann insbesondere in der Anfangsphase des Abkühlprozesses, d. h. bei Temperaturen zwischen ca. 80 und 40°C der Temperaturgradient weiter gesteigert werden.

Des weiteren sollte der Innenraum des Kessels mit einem Überdruck von mindestens 3 bar beaufschlagbar sein, um eine Sterilisierung des Kessels mit Heißdampf vornehmen zu können.

Um den Wassergehalt der Lebensmittelzubereitung in Folge einer Vakuumkühlung nicht zu verändern, sollten die bei der Evakuierung des Innenraums des Kessels entstehenden Brüden der wasserhaltigen Lebensmittelzubereitung kondensierbar und das Kondensat in den Innenraum des Kessels rückleitbar sein.

Das erfindungsgemäße Verfahren wird nachfolgend anhand eines Ausführungsbeispiels einer Vorrichtung nach der Erfindung näher erläutert. Es zeigt:
- Fig. 1: eine skizzenhafte Darstellung einer Vorrichtung zum diskontinuierlichen Kühlen und Mischen einer Fruchtzubereitung und
- Fig. 2: den grafischen Verlauf der Produkttemperatur über der Zeit bei dem erfindungsgemäßen Verfahren sowie bei einem Verfahren nach dem Stand der Technik.

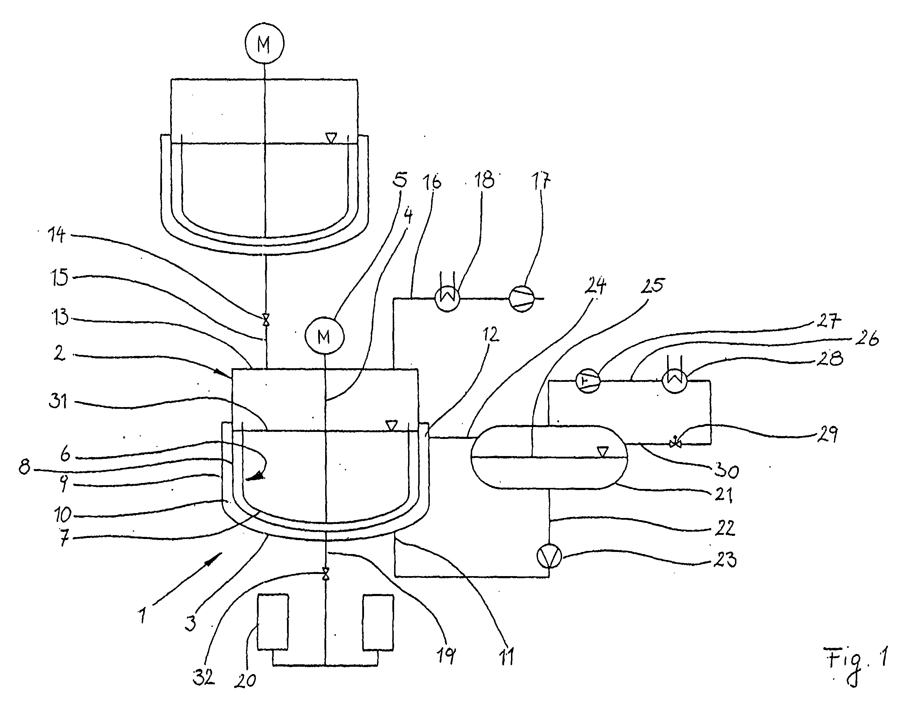

Eine in Figur 1 dargestellte Vorrichtung 1 zum diskontinuierlichen Kühlen und Mischen einer fließfähigen Fruchtzubereitung besitzt einen aus Edelstahl bestehenden zylindrischen Kessel 2 mit einem kalottenförmigen Bodenbereich 3. Im Innern des Kessels 2 ist ein um die Drehachse 4 mittels eines Motors 5 drehantreibbares Rührwerk 6 angeordnet, dessen ankerförmige Rührblätter 7 dem gekrümmten Verlauf der gegenüberliegenden Wandabschnitte 8 angepaßt sind. Es liegt somit ein Schabereffekt der Rührblätter 7 vor, der dafür sorgt, daß besonders stark abgekühlte Fruchtzubereitung, die unmittelbar in Kontakt mit den Wandbereichen 8 des Kessels 2 steht, von diesen abgehoben und in das Innere des Kessels 2 gefördert wird. In einem unteren Bereich ist der Kessel 2 mit einem Doppelmantel 9 versehen , der einen Zwischenraum 10 begrenzt, durch den ein Wärmeträgermedium in Form eines Kompressionskältemittels leitbar ist.

In den Zwischenraum 10 des Doppelmantels 9 mündet im Bodenbereich 3 ein Kältemittelzufluß 11, wohingegen vom oberen Ende des Zwischenraums 10 ein Kältemittelabfluß 12 abgeht.

Der Behälter 2 ist an seiner Oberseite mit einem Deckel 13 verschlossen, in den einerseits ein mit einem Ventil 14 absperrbarer Produkteinlauf 15 mündet. Des weiteren durchdringt eine Vakuumleitung 16 den Deckel 13. Die aus dem Innenraum des Kessels 2 mit Hilfe einer Vakuumpumpe 17 geförderte Mischung aus Wasserdampf und Luft wird durch einen Kühler 18 geleitet. Im Bodenbereich 3 geht von dem Kessel 2 eine Abflußleitung 19 aus, die zu Pufferspeichern 20 für das abgekühlte Produkt führt.

Von einem Abscheidebehälter 21 für das Kompressionskältemittel geht an dessen Unterseite eine zu dem Kältemittelzufluß 11 führende Zuflußleitung 22 aus, in deren Verlauf eine Pumpe 23 angeordnet ist. An den Abscheidebehälter 21 ist an einer Seitenwand eine Abflußleitung 24 angeschlossen, die mit dem Kältemittelabfluß 12 an dem Doppelmantel 9 verbunden ist.

In dem Abscheidebehälter 21 bildet sich ein Spiegel 25 des flüssigen Kompressionskältemittels aus. Oberhalb des Spiegels geht zum einen eine Leitung 26 aus, die über einen Verdichter 27 und einen Kühler 28 zu einer Drossel 29 geführt ist, die über eine Leitung 30 mit dem Abscheidebehälter 21 verbunden ist.

Das mit der Vorrichtung 1 durchführbare Verfahren läuft wie folgt ab:

Über den Produkteinlauf 15 wird dem leeren Kessel 2 eine heiße Fruchtzubereitung mit einer Temperatur von ca. 80 bis 90 °C zugeführt, bis sich ein Füllstand bis zu einem Spiegel 31 einstellt. Die Fruchtzubereitung wird durch Rotation des Rührwerks 6 ständig in Bewegung gehalten.

Durch den Doppelmantel 10 wird das Kompressionskältemittel in Form von flüssigem Ammoniak geleitet. Der mit einer Temperatur von ca. minus 17° im Bereich des Kältemittelzuflusses 11 in den Zwischenraum 10 des Doppelmantels 9 eintretende Ammoniak verdampft teilweise durch das zu kühlende Produkt.

Die von der Vorrichtung 1 gebildete Kühleinrichtung arbeitet nach Art eines überfluteten Erhitzers, wobei der Anteil des gasförmigen Ammoniaks beim Austritt aus dem Kältemittelabfluß 12 ca. 30 Massenprozent beträgt. Nach Eintritt des Ammoniaks in den Abscheidebehälter 21 findet eine Trennung der flüssigen und der gasförmigen Phase statt: Während die flüssige Phase über die Zuflußleitung 22 und die Pumpe 23 wieder dem Zwischenraum 10 des Doppelmantels 9 zugeführt wird, wird der gasförmige Anteil mittels des Verdichters 27 komprimiert, wobei sich seine Temperatur auf ca. 100°C erhöht. Nach einer Rückkühlung im Kühler 28 auf ca. 45 °C erfolgt nach der Drossel 29 eine Expansion des Ammoniaks, der sodann in teilweise flüssiger Form dem Abscheidebhälter 21 zugeleitet wird.

Aufgrund der durch die Blasen sehr turbulenten Strömung des teilweise flüssigen, teilweise gasförmigen Ammoniaks durch den Zwischenraum 10 des Doppelmantels 9 ist der Wärmeübergang von der Fruchtzubereitung - insbesondere in Verbindung mit den wandgängigen Rührblättern 7 - sehr gut. Die Drehzahl des Motors 5 wird so gewählt, daß sich in dem Zeitraum zwischen dem Überstreichen zweier aufeinander folgender Rührblätter 7 eine dünne Eisschicht bilden kann, die durch die Rührblätter 7 abgehoben und in das Innere des Behälters 2 befördert wird. Die Schmelzentalpie kann somit im Innern des Behälters zur Abkühlung der Fruchtzubereitung genutzt werden.

Ist die Lebensmittelzubereitung bis auf eine Temperatur ca 20°C abgekühlt, so wird der Inhalt des Kessels 2 durch Öffnen der entsprechenden Ventile 32 in einen der Pufferbehälter 20 abgelassen. Die Kapazität des Behälters 2 beträgt ca. 1700 kg einer Fruchtzubereitung.

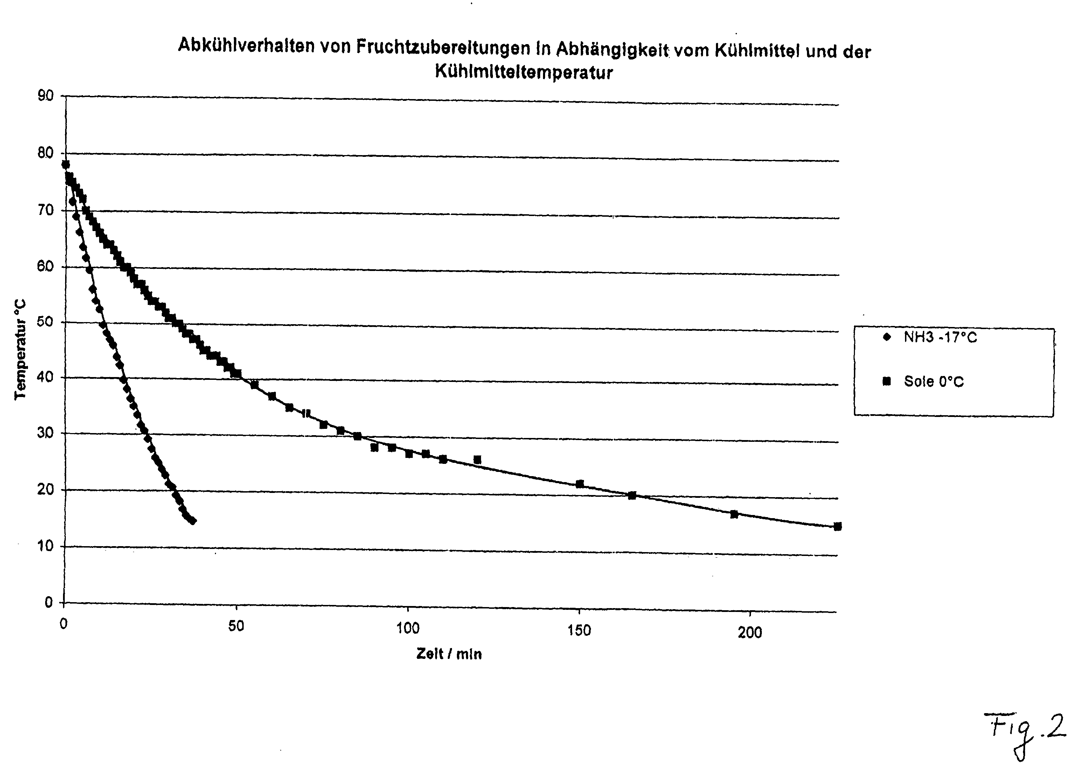

Figur 2 zeigt den Verlauf zweier Abkühlkurven einer Fruchtzubereitung - jeweils ohne Anwendung der Vakuumkühlung -, und zwar einmal bei Anwendung des erfindungsgemäßen Verfahrens (Kurve A) und zum anderen bei einem Kühlverfahren nach dem Stand der Technik (Kurve B) unter Verwendung einer Kühlsohle als Wärmeträgermedium im Zwischenraum 10 des Doppelmantels 9. Die Chargenmenge der testweise verwendeten, nicht stückigen Fruchtzubereitung betrug 300 kg.

Ausgehend von der Starttemperatur von ca. 77 °C erfolgt die Abkühlung bei dem erfindungsgemäßen Verfahren (Kurve A) mit einem sehr großen Temperaturgradienten, so daß bereits nach ca. 20 Minuten eine Temperatur von 40°C und nach ca. weiteren 15 Minuten ein Temperatur von 20°C erreicht werden kann. Selbst eine Abkühlung auf eine Temperatur von 10°C ist in deutlich weniger als 50 Minuten möglich.

Im Vergleich hierzu verläuft die Abkühlung derselben Fruchtzubereitung bei Verwendung einer konventionellen Kühlsohle aus Propylenglykol anstelle von Ammoniak wie bei der Erfindung von Beginn an mit einem betraglich kleineren Temperaturgradienten. Während die Unterschiede anfänglich noch nicht allzusehr ins Gewicht fallen mögen - eine Temperatur von 40°C ist nach ca. 50 Minuten erreichbar - verläuft die Temperaturkurve insbesondere im Bereich unterhalb von 40°C extrem flach. Während eine Temperatur von 20°C erst nach ca. 165 Minuten erreicht werden kann, würde eine weitere Abkühlung bis auf 10°C eine weitere sehr große Zeit in Anspruch nehmen. Insbesondere im Bereich niedriger Temperaturen, wo eine Unterstützung durch eine Vakuumkühlung nicht sinnvoll möglich ist, lassen sich somit mit dem erfindungsgemäßen Verfahren enorme Zeitvorteile erzielen.

## Patentansprüche

1. Verfahren zum diskontinuierlichen Kühlen und Mischen einer fließfähigen Fruchtzubereitung in einem mit einem rotierenden Rührwerk ausgestatteten Kessel, wobei die Fruchtzubereitung mittels des Rührwerks entlang von Wandbereichen des Kessels bewegt wird und wobei ein von einem Doppelmantel des Kessels gebildeter Zwischenraum von einem Wärmeträgermedium durchströmt wird, welches in einer Kühleinrichtung rückgekühlt und im rückgekühlten Zustand wieder dem Zwischenraum des Doppelmantels zugeführt wird, wobei des weiteren der Kessel zu Beginn des Kühlprozesses mit einer Chargenmenge von mindestens mehreren hundert Kilogramm der Fruchtzubereitung befüllt wird, **dadurch gekennzeichnet, daß** als Wärmeträgermedium ein Kompressionskältemittel verwendet wird, das innerhalb des Zwischenraums des Doppelmantels zumindest zum Teil von der flüssigen in die gasförmige Phase übergeht.

2. Verfahren nach Anspruch 1, **dadurch gekennzeichnet, daß** während des Abkühlvorgangs zumindest zeitweise an den Innenraum des Kessels ein Vakuum angelegt werden.

3. Verfahren nach Anspruch 2, **dadurch gekennzeichnet, daß** das Vakuum während eines Zeitraums angelegt wird, in dem die Temperatur der Fruchtzubereitung noch oberhalb von ca. 30°C ist.

4. Verfahren nach Anspruch 2 oder 3, **dadurch gekennzeichnet, daß** die beim Erzeugen des Vakuums aus dem Kessel abgezogenen Brüden der wasserhaltigen Fruchtzubereitung kondensiert und wieder dem Kessel zugeführt werden.

5. Verfahren nach einem der Ansprüche 1 bis 4, **dadurch gekennzeichnet, daß** mittels des Rührwerks die Fruchtzubereitung von Wandbereichen des Kessels abgeschabt wird.

6. Verfahren nach einem der Ansprüche 1 bis 5, **dadurch gekennzeichnet, daß** innerhalb des Zwischenraums des Doppelmantels ein Blasensieden des Kompressionskältemittels stattfindet.

7. Verfahren nach einem der Ansprüche 1 bis 6, **dadurch gekennzeichnet, daß** die Kühleinrichtung ein Wärmetauscher ist, der von einem zweiten Kompressionskältemittel durchströmt wird, das in einem zweiten Kältemittelkreislauf geführt wird und mit dem ersten Kompressionskältemittel im Wärmeaustausch steht.

8. Verfahren nach Anspruch 7, **dadurch gekennzeichnet, daß** der Zwischenraum in dem Doppelmantel von einem FCKW, einem HFCKW, einem HFKW und der zweite Kältemittelkreislauf von einem halogenfreien Kältemittel, z. B. NH₃, durchströmt wird.

9. Vorrichtung (1) zum diskontinuierlichen und chargenweisen Kühlen und Mischen einer fließfähigen Fruchtzubereitung, mit einem Kessel (2), der mit einem drehantreibbaren Rührwerk (6) versehen ist, mit dem die Fruchtzubereitung entlang von Wandbereichen (8) des Kessels (2) bewegbar ist, wobei der Kessel (2) zur Aufnahme von Chargenmengen von mindestens mehreren hundert Kilogramm vorgesehen ist und zumindest bereichsweise einen Doppelmantel (9) aufweist, durch dessen Zwischenraum (10) ein Wärmeträgermedium leitbar ist, **dadurch gekennzeichnet, daß** der Zwischenraum (10) mit einem Druck von 17 bar beaufschlagbar ist.

10. Vorrichtung nach Anspruch 9, **dadurch gekennzeichnet, daß** der Innenraum des Kessels (2) mit einem Vakuum beaufschlagbar ist.

11. Vorrichtung nach Anspruch 9 oder 10, **dadurch gekennzeichnet, daß** der Innenraum des Kessels (2) mit einem Überdruck von mindestens 3 bar beaufschlagbar ist.

12. Vorrichtung nach Anspruch 11, **dadurch gekennzeichnet, daß** bei der Evakuierung des Innenraums des Kessels (2) entstehende Brüden der Fruchtzubereitung kondensierbar und das Kondensat in den Innenraum des Kessels (2) rückleitbar ist.

## Claims

1. A method for the intermittent cooling and mixing of a fruit preparation in the fluid state in a boiling vessel having a rotating stirrer, with the fruit preparation being moved by means of the stirrer along wall regions of the boiling vessel and with an intermediate space formed by a double casing being flowed through by a heat transfer medium which is re-cooled in a cooling device and in the re-cooled state is supplied again to the intermediate space of the double casing, with the boiling vessel further being filled at the beginning of the cooling process with a batch quantity of not less than several hundred kilograms of fruit preparation, **characterized in that** a compression coolant is used as a heat transfer medium which changes within the intermediate space of the double casing at least partly from the liquid to the gaseous phase.

2. A method according to claim 1, **characterized in that** a vacuum is applied at least temporarily to the inner space of the boiling vessel during the cooling process.

3. A method according to claim 2, **characterized in that** the vacuum is applied during a period in which the temperature of the fruit preparation is still above approximately 30°C.

4. A method according to claim 2 or 2, **characterized in that** the vapors of the aqueous fruit preparation as drawn off from the boiling vessel during the production of the vacuum are condensed and supplied to the boiling vessel again.

5. A method according to one of the claims 1 to 4, **characterized in that** the fruit preparation is scraped from the wall regions of the boiling vessel by means of the stirrer.

6. A method according to one of the claims 1 to 5, **characterized in that** nucleate boiling of the compression coolant occurs within the intermediate space of the double casing.

7. A method according to one of the claims 1 to 6, **characterized in that** the cooling device is a heat exchanger which is flowed through by a second compression coolant which is guided in a second coolant circulation and is in heat exchange with the first compression coolant.

8. A method according to claim 7, **characterized in that** the intermediate space in the double casing is flowed through by a CFC, an HCFC, an HFC, and the second coolant circulation is flowed through by a halogen-free coolant, e.g. NH₃.

9. An apparatus (1) for the intermittent and batched cooling and mixing of a fruit preparation in the fluid state, comprising a boiling vessel (2) which is provided with a rotatably driven stirrer (6) with which the fruit preparation can be moved along wall regions (8) of the boiling vessel (2), with the boiling vessel (2) being provided for receiving batch quantities of not less than several hundred kilograms and comprises a double casing (9) at least in sections, through the intermediate space (10) of which a heat transfer medium can be guided, **characterized in that** the intermediate space (10) can be subjected to a pressure of 17 bar.

10. An apparatus according to claim 9, **characterized in that** the inner space of the boiling vessel (2) can be subjected to a vacuum.

11. An apparatus according to claim 9 or 10, **characterized in that** the inner space of the boiling vessel (2) can be subjected to an excess pressure of not less than 3 bar.

12. An apparatus according to claim 11, **characterized in that** vapors of the fruit preparation as produced during the evacuation of the inner space of the boiling vessel (2) can be condensed and the condensate can be guided back to the inner space of the boiling vessel (2).

## Revendications

1. Procédé pour le refroidissement et le mélange discontinus d'une préparation à base de fruits fluide dans une cuve équipée d'un agitateur rotatif, dans lequel la préparation à base de fruits est déplacée au moyen de l'agitateur le long de zones des parois de la cuve et dans lequel un espace intermédiaire formé par une double enveloppe de la cuve est parcouru par un fluide caloporteur qui est refroidi dans un dispositif de refroidissement et ramené à l'état refroidi dans l'espace intermédiaire de la double enveloppe, la cuve étant en outre remplie au début du processus de refroidissement avec une charge d'au moins plusieurs centaines de kilogrammes de la préparation à base de fruits, **caractérisé en ce que** le fluide caloporteur utilisé est un réfrigérant à compression qui passe au moins en partie de l'état liquide à l'état gazeux à l'intérieur de l'espace intermédiaire de la double enveloppe.

2. Procédé selon la revendication 1, **caractérisé en ce qu'**un vide est créé au moins temporairement à l'intérieur de la cuve pendant l'opération de refroidissement.

3. Procédé selon la revendication 2, **caractérisé en ce que** le vide est appliqué pendant une période pendant laquelle la température de la préparation à base de fruits est encore supérieure à 30°C environ.

4. Procédé selon la revendication 2 ou 3, **caractérisé en ce que** les vapeurs chaudes provenant de la préparation à base de fruits aqueuse extraites de la cuve pendant la création du vide sont condensées et ramenées dans la cuve.

5. Procédé selon l'une quelconque des revendications 1 à 4, **caractérisé en ce que** la préparation à base de fruits est raclée sur des parties de parois de la cuve au moyen de l'agitateur.

6. Procédé selon l'une quelconque des revendications 1 à 5, **caractérisé en ce qu'**une ébullition nucléée du réfrigérant à compression se produit dans l'espace intermédiaire de la double enveloppe.

7. Procédé selon l'une quelconque des revendications 1 à 6, **caractérisé en ce que** le dispositif de refroidissement est un échangeur de chaleur parcouru par un second réfrigérant à compression qui est acheminé dans un deuxième circuit de refroidissement et qui se trouve en relation d'échange de chaleur avec le premier réfrigérant à compression.

8. Procédé selon la revendication 7, **caractérisé en ce que** l'espace intermédiaire de la double enveloppe est parcouru par un chlorofluorocarbone, un chlorofluorocarbone halogéné, un fluorocarbone halogéné, et le second circuit de refroidissement par un réfrigérant sans halogène, par exemple du NH₃.

9. Dispositif (1) pour le refroidissement et le mélange discontinus et par charges d'une préparation à base de fruits fluide, avec une cuve (2) pourvue d'un agitateur (6) pouvant être entraîné en rotation avec lequel la préparation à base de fruits peut être déplacée le long de parties de paroi (8) de la cuve (2), la cuve (2) étant destinée à recevoir des charges d'au moins plusieurs centaines de kilogrammes et présentant au moins dans certaines zones une double enveloppe (9) dans l'espace intermédiaire (10) de laquelle un fluide caloporteur peut être acheminé, **caractérisé en ce que** l'espace intermédiaire (10) peut être soumis à une pression de 17 bars.

10. Dispositif selon la revendication 9, **caractérisé en ce que** l'espace intérieur de la cuve (2) peut être soumis à un vide.

11. Dispositif selon la revendication 9 ou 10, **caractérisé en ce que** l'espace intérieur de la cuve (2) peut être soumis à une surpression d'au moins 3 bars.

12. Dispositif selon la revendication 11, **caractérisé en ce que** les vapeurs chaudes produites par la préparation à base de fruits lors de l'établissement du vide dans l'espace intérieur de la cuve (2) peuvent être condensées, et le condensat peut être ramené à l'intérieur de la cuve (2).
